# EUROPEAN PATENT APPLICATION

(11) **EP 4 637 258 A1**
(43) Date of publication of application: **22.10.2025**
(21) Application number: 24760514.0
(22) Date of filing: 08.02.2024
(51) Int. Cl.: H04W 76/16, H04W 76/34, H04W 48/18, H04W 24/02, H04W 88/06

(54) **METHOD AND ELECTRONIC DEVICE FOR TEMPERATURE-BASED DUAL CONNECTIVITY CONTROL**

(30) Priority: 24.02.2023 KR 20230025000; 27.03.2023 KR 20230039910
(71) Applicant: Samsung Electronics Co., Ltd., Suwon-si, Gyeonggi-do 16677 (KR)
(72) Inventor: MIN, Jungsik, Suwon-si, Gyeonggi-do 16677 (KR); HEO, Wonhyung, Suwon-si, Gyeonggi-do 16677 (KR); PARK, Daehee, Suwon-si, Gyeonggi-do 16677 (KR); PARK, Seongyong, Suwon-si, Gyeonggi-do 16677 (KR); PARK, Jinseong, Suwon-si, Gyeonggi-do 16677 (KR); SON, Seunghee, Suwon-si, Gyeonggi-do 16677 (KR); CHOI, Seongkyu, Suwon-si, Gyeonggi-do 16677 (KR); HAN, Woong, Suwon-si, Gyeonggi-do 16677 (KR)
(74) Representative: Gulde & Partner
(86) International application number: PCT/KR2024/001938
(87) International publication number: WO 2024/177324

(57) **Abstract**

Disclosed is an electronic device comprising at least one antenna, at least one communication circuit, at least one transceiver, at least one sensor circuit, a processor and a memory. While performing communication based on multi-RAT dual connectivity (MR-DC) using a first radio access technology (RAT) and a second RAT, the electronic device can release, on the basis of a first throughput associated with the first RAT and a second throughput associated with the second RAT, a connection associated with the first RAT or a connection associated with the second RAT if the temperature of the electronic device exceeds a threshold temperature. If the first throughput is less than the second throughput, the electronic device can release, on the basis of the number of reception paths associated with the first RAT and the number of reception paths associated with the second RAT, the connection associated with the first RAT or the connection associated with the second RAT.

## Description

### TECHNICAL FIELD

Embodiments disclosed herein relate to a method and an electronic device for controlling dual connectivity based on temperature.

### BACKGROUND ART

After the deployment of the 4th generation (4G) mobile communication network, research on the 5th generation (5G) mobile communication is being conducted to deal with the increase in data traffic. In a 5G mobile communications deployment scenario, the 5G mobile communications may support access to a 5G mobile communication network based on a 4G mobile communication network or access to the 4G mobile communication network based on the 5G mobile communication network. For example, an electronic device may be simultaneously connected to a plurality of cells associated with different radio access technologies (RATs).

In the 5th generation mobile communication, electronic devices may be connected to a network based on a non-standalone (NSA) method. For example, the electronic device may be connected to a network according to an E-UTRAN new radio (NR) dual connectivity (EN-DC) method. Here, E-UTRAN may refer to evolved-UTRAN, and UTRAN may refer to a universal mobile telecommunication system (UMTS) radio access network. In the case of EN-DC, a long term evolution (LTE) base station with an evolved packet core (EPC) may operate as a master base station (e.g., a master eNodeB (eNB)) of the electronic device. In this case, the LTE base station may anchor signaling of the control plane to the electronic device. A 5G new radio (NR) base station may operate as a secondary base station (e.g., a secondary gNodeB (gNB)) of the electronic device. The NR base station may transmit and receive data of a user plane to and from the electronic device through a secondary cell group (SCG). For another example, the electronic device may be connected to the network according to the NR E-UTRAN dual connectivity (NE-DC) method. In this case, the NR base station may operate as a master gNB and the LTE base station may operate as a secondary eNB.

The aforementioned information may be provided as the related art to aid in understanding the disclosure. No claim or determination is made as to whether any of the above matters constitutes the related art regarding to the disclosure.

### DISCLOSURE OF THE INVENTION

### TECHNICAL SOLUTION

An electronic device according to an embodiment disclosed herein may include at least one antenna, at least one communication circuitry electrically connected to the at least one antenna and including a plurality of receive paths, at least one transceiver electrically connected to the at least one communication circuitry, at least one sensor circuitry configured to detect a temperature of the electronic device, at least one processor electrically connected to the sensor circuitry and the at least one transceiver, and a memory electrically connected to the at least one processor. The memory may store instructions that, when executed, cause the processor to perform communication based on multi-RAT dual connectivity (MR-DC) using a first radio access technology (RAT) and a second RAT using the at least one communication circuitry. The memory may store instructions that, when executed, causes the processor to identify a temperature of the electronic device using the at least one sensor circuitry during the performance of the communication based on the MR-DC. The memory may store instructions that, when executed, cause the processor to identify a first throughput associated with the first RAT and a second throughput associated with the second RAT based on the identified temperature exceeding a threshold temperature. The memory may store instructions that, when executed, cause the processor to determine release of a connection associated with the first RAT or release of a connection associated with the second RAT based on the number of first receive paths associated with the first RAT among the plurality of receive paths and the number of second receive paths associated with the second RAT among the plurality of receive paths, when the first throughput is less than the second throughput.

A method for temperature-based dual connectivity control of an electronic device according to an embodiment disclosed herein may include performing communication based on MR-DC using a first radio access technology (RAT) and a second RAT, identifying a temperature of the electronic device during the performance of the communication based on the MR-DC, identifying a first throughput associated with the first RAT and a second throughput associated with the second RAT based on the identified temperature exceeding a threshold temperature, and determining release of the connection associated with the first RAT or release of the connection associated with the second RAT based on the number of first receive paths associated with the first RAT and the number of second receive paths associated with the second RAT among the plurality of receive paths, when the first throughput is less than the second throughput.

A computer-readable storage medium according to an embodiment disclosed herein may store instructions that, when executed by a processor, cause the processor to perform communication based on MR-DC using a first radio access technology (RAT) and a second RAT, identify a temperature of the electronic device during the performance of the communication based on the MR-DC, identify a first throughput associated with the first RAT and a second throughput associated with the second RAT based on the identified temperature exceeding a threshold temperature, and determine release of the connection associated with the first RAT or release of the connection associated with the second RAT based on the number of first receive paths associated with the first RAT and the number of second receive paths associated with the second RAT among the plurality of receive paths, when the first throughput is less than the second throughput.

### BRIEF DESCRIPTION OF THE DRAWINGS

FIG. 1 illustrates a network environment of an electronic device according to an embodiment.
FIG. 2 illustrates wireless communication systems that provide networks of legacy communication and/or 5G communication according to various embodiments.
FIG. 3 illustrates a block diagram of the electronic device according to an embodiment.
FIG. 4 illustrates a structure of wireless communication circuitry of an electronic device according to an embodiment.
FIG. 5 illustrates an exemplary antenna structure of an electronic device according to an embodiment.
FIG. 6 illustrates a structure of a communication circuitry of an electronic device according to an embodiment.
FIG. 7 illustrates a flowchart of a method for controlling dual connectivity of an electronic device according to an embodiment.
FIG. 8 illustrates a flowchart of operation 725 of FIG. 7 according to an example.
FIG. 9 illustrates a flowchart of operation 725 of FIG. 7 according to an example.
FIG. 10 illustrates a flowchart of operation 725 of FIG. 7 according to an example.
FIG. 11 illustrates a block diagram of an electronic device in a network according to various embodiments.
FIG. 12 is a block diagram of an electronic device for supporting legacy network communication and 5G network communication, according to various embodiments.

With respect to the description of the drawings, the same or similar reference signs may be used for the same or similar elements.

### MODE FOR CARRYING OUT THE INVENTION

Hereinafter, various embodiments disclosed in the disclosure will be described with reference to the accompanying drawings. However, this is not intended to limit the invention to the specific embodiments, and it is to be construed to include various modifications, equivalents, and/or alternatives of embodiments of the invention.

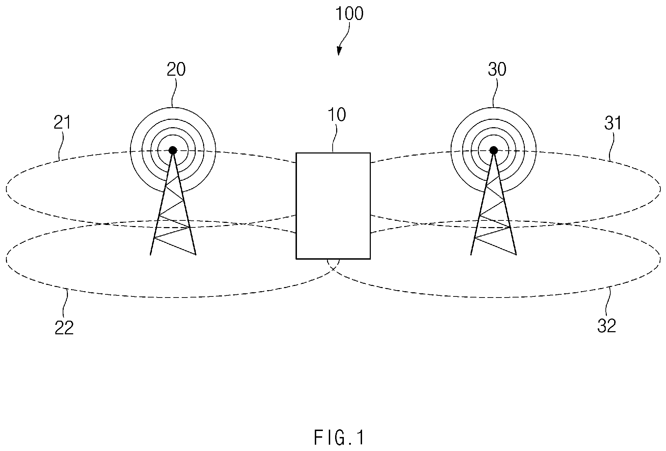

FIG. 1 illustrates a network environment 100 of an electronic device according to an embodiment.

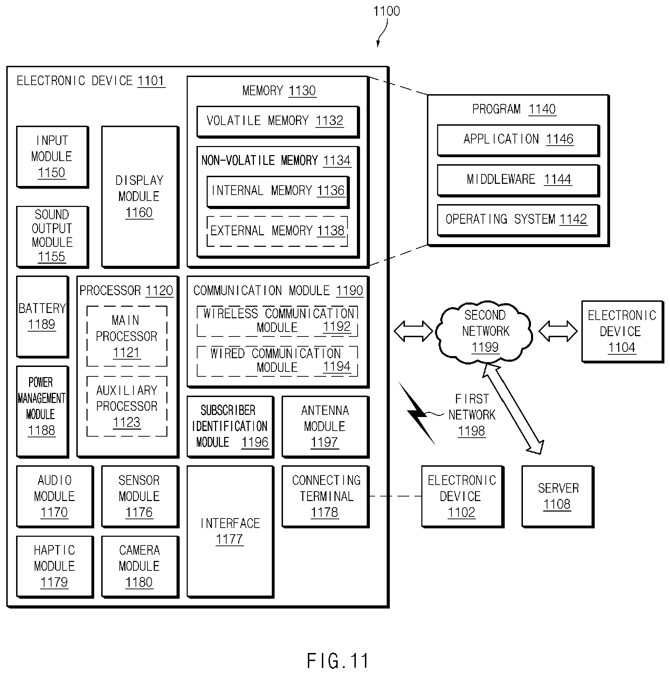

Referring to FIG. 1, according to an embodiment, an electronic device 10 may include any electronic device supporting dual connectivity. For example, the electronic device 10 may include a user equipment having mobility or any wireless electronic devices. For example, the electronic device 10 may be any handheld devices. The electronic device 10 may include, for example, at least one of a mobile phone, a smart watch, smart glasses, or an Internet-of-Things (IoT) device. In an example, the electronic device 10 may correspond to an electronic device 1101 described below with reference to FIG. 11. Examples of dual connectivity may include multi radio access technology (RAT) dual connectivity (MR-DC) supporting dual connectivity based on different RATs.

In an example, a first base station 20 may be associated with at least one cell. For example, the first base station 20 may be associated with a first-1 cell 21 and/or a first-2 cell 22. For example, the first-1 cell 21 and the first-2 cell 22 may be cells having the same RAT. For another example, the first-1 cell 21 and the first-2 cell 22 may be cells having RATs different from each other.

In an example, a second base station 30 may be associated with at least one cell. For example, the second base station 30 may be associated with a second-1 cell 31 and/or a second-2 cell 32. For example, the second-1 cell 31 and the second-2 cell 32 may be cells having the same RAT. For another example, the second-1 cell 31 and the second-2 cell 32 may be cells having RATs different from each other.

In an embodiment, the electronic device 10 may perform MR-DC based communication through the first base station 20. For example, the first-1 cell 21 may support communication based on 4G RAT (e.g., RAT corresponding to E-UTRAN), and the first-2 cell 22 may support communication based on 5G RAT (e.g., RAT corresponding to NG-RAN). The first base station 20 is physically located in one location, but may be a base station connected to a plurality of core networks. The electronic device 10 may perform MR-DC-based communication by, for example, being connected to the first-1 cell 21 and the first-2 cell 22 simultaneously (or substantially simultaneously). Similarly, the electronic device 10 may perform MR-DC-based communication through the second-1 cell 31 and the second-2 cell 32 of the second base station 30.

In an embodiment, the electronic device 10 may perform MR-DC-based communication through the first base station 20 and the second base station 30. For example, the first-1 cell 21 may support communication based on 4G RAT, and the second-1 cell 31 may support communication based on 5G RAT. For example, the electronic device 10 may perform MR-DC-based communication by being connected (e.g., attached) to the first-1 cell 21 and the second-1 cell 31 simultaneously (or substantially simultaneously).

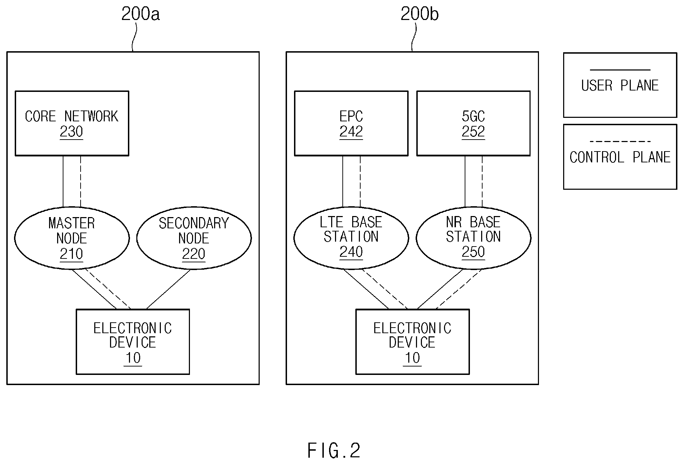

The network environment illustrated in FIG. 1 is exemplary, and embodiments of the disclosure are not limited thereto. For example, any network environment capable of supporting MR-DC may be applied to the embodiments of the disclosure. Below, a wireless communication system capable of supporting MR-DC is described with reference to FIG. 2.

FIG. 2 illustrates wireless communication systems that provide networks of legacy communication and/or 5G communication according to various embodiments.

Referring to FIG. 2, network environments 200a and 200b may include at least one of a legacy network and a 5G network. The legacy network may include, for example, a 3rd generation partnership project (3GPP) standard 4G or an LTE base station 240 (e.g., an eNodeB (eNB)) supporting wireless connection with the electronic device 10 and an evolved packet core (EPC) 242 managing 4G communication. The 5G network may include, for example, a new radio (NR) base station 250 (e.g., a gNodeB (gNB)) supporting a wireless connection with the electronic device 10 and a 5th generation core (5GC) 252 managing 5G communication of the electronic device 10.

According to an embodiment, the electronic device 10 may transmit and receive a control message and user data through legacy communication and/or 5G communication. The control message may include a message related to at least one of, for example, security control, bearer setup, authentication, registration, or mobility management, of the electronic device 10. The user data may mean, for example, user data excluding control messages transmitted and received between the electronic device 10 and a core network 230 (e.g., an EPC 242).

According to an embodiment, the electronic device 10 may support dual connectivity (e.g., multi-RAT (MR)-dual connectivity (DC)) using different radio access technologies (RATs). For example, the electronic device 10 may transmit and receive at least one of a control message or user data to and from at least some of the 5G network (e.g., the NR base station 250 and the 5GC 252) using at least some of a legacy network (e.g., an LTE base station 240 and the EPC 242).

Referring to reference number 200a, in the MR-DC environment, one of the LTE base station 240 or the NR base station 250 may operate as a master node (MN) 210 and the other may operate as a secondary node (SN) 220. The MN 210 may be connected to the core network 230 to transmit and receive control messages. The MN 210 and the SN 220 may be connected through a network interface to transmit and receive messages related to radio resource (e.g., communication channel) management.

According to an embodiment, the MN 210 may be the LTE base station 240, the SN 220 may be the NR base station 250, and the core network 230 may be the EPC 242. For example, the electronic device 10 may transmit and receive control messages and/or user data through the LTE base station 240 and the EPC 242, and user data may be transmitted and received through the LTE base station 240 and the NR base station 250.

Referring to reference numeral 200b, the legacy network and the 5G network according to an embodiment may each independently provide data transmission and reception. For example, the electronic device 10 and the EPC 242 may transmit and receive control messages and user data through the LTE base station 240. For another example, the electronic device 10 and the 5GC 252 may transmit and receive control messages and user data through the NR base station 250.

According to an embodiment, the electronic device 10 may be registered with at least one of the EPC 242 and the 5GC 252 to transmit and receive control messages.

According to various embodiments, the EPC 242 or the 5GC 252 may manage communication of the electronic device 10 by interworking. For example, mobility information about the electronic device 10 may be transmitted and received through an interface between the EPC 242 and the 5GC 252.

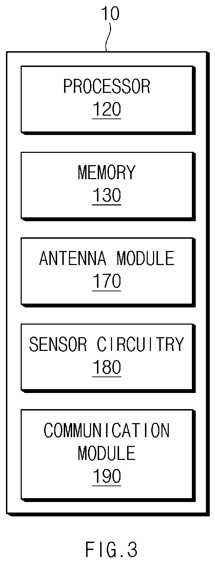

FIG. 3 illustrates a block diagram of the electronic device according to an embodiment.

According to an embodiment, an electronic device 10 may include a processor 120, memory 130, an antenna module 170, sensor circuitry 180, and a communication module 190. For example, an electronic device 10 may correspond to the electronic device 1101 in FIG. 11. The components of the electronic device 10 illustrated in FIG. 3 is exemplary, and embodiments of the disclosure are not limited thereto. For example, the electronic device 10 may further include a component not shown in FIG. 3 (e.g., the component of the electronic device 1101 in FIG. 11).

For example, the processor 120 may control various components of the electronic device 10 so that the electronic device 10 performs various operations. For example, the processor 120 may correspond to the processor 1120 in FIG. 11. For example, the operations of the electronic device 10 to be described below may be referred to as being performed by the processor 120. The processor 120 may include a baseband processor that processes a baseband signal received from the communication module 190 or transmits a baseband signal to the communication module 190. The processor 120 may perform various operations of the electronic device 10 by executing one or more instructions stored in the memory 130. The processor 120 may include one processor or a plurality of processors.

The processor 120 may be electrically, operatively, or functionally connected to the memory 130, the antenna module 170, the sensor circuitry 180, and/or the communication module 190. In the disclosure, when one component is referred to as being "operatively" connected to another component, it may mean that the component is connected to operate the other component. For example, one component may operate another component by transmitting a control signal to the other component, either directly or via the still another component. In the disclosure, when one component is referred to as being "functionally" connected to another component, it may mean that the component is connected to execute a function of the other component. For example, one component may execute a function of another component by transmitting a control signal to the other component, either directly or via the still another component.

For example, the memory 130 may be implemented as one chip or chipset with the processor 120. For example, the memory 130 may be implemented as a separate chip from the processor 120. In an example, the memory 130 may correspond to the memory 1130 in FIG. 11.

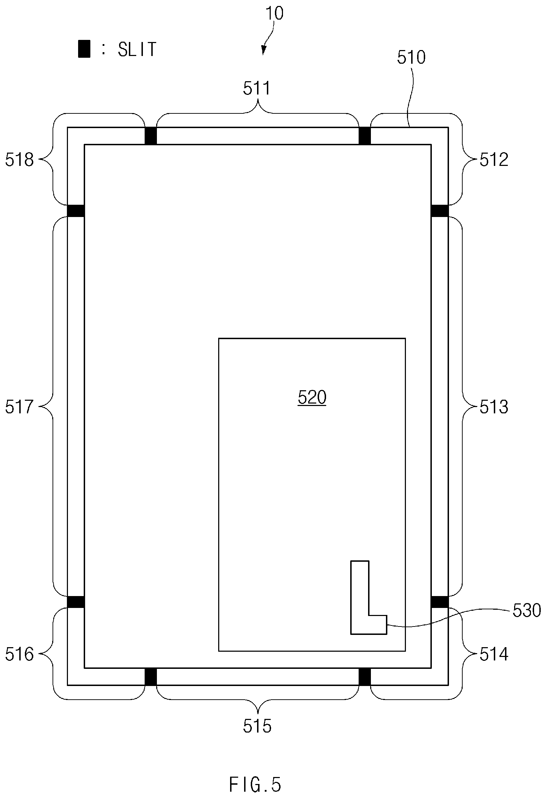

For example, the antenna module 170 may include a plurality of antennas. The antenna module 170 may include a plurality of radiators that may be used as antennas. For example, at least some of the plurality of antennas may include a portion of the housing of the electronic device 10 (e.g., a portion of a side member), a metallic pattern, a metallic radiator, and/or a conductive member. Examples of antennas may be described below with reference to FIG. 5. The antenna module 170 may include tuning circuitry for tuning the antennas. In an example, the antenna module 170 may correspond to an antenna module 1197 in FIG. 11.

The sensor circuitry 180 may include at least one sensor for measuring the temperature of the electronic device 10. For example, the sensor circuitry 180 may correspond to a sensor module 1176 in FIG. 11. The processor 120 may identify (e.g., measure or detect) the temperature of the electronic device 10 using the sensor circuitry 180. The temperature of the electronic device 10 may include, for example, an internal temperature and/or a surface temperature of the electronic device 10. In an example, the processor 120 may identify the temperature of the electronic device 10 by acquiring a temperature value using a sensor included in the sensor circuitry 180. In an example, the processor 120 may acquire a plurality of temperature values using a plurality of sensors included in the sensor circuitry 180. The processor 120 may identify the temperature of the electronic device 10 based on a plurality of temperature values. The processor 120 may identify the temperature based on an average value or a weighted sum of a plurality of temperature values. It will be understood by those skilled in the art that various methods may be used to determine temperature in the disclosure.

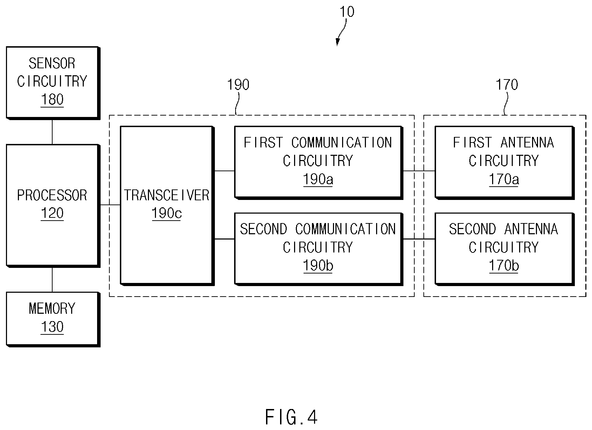

The communication module 190 may include any components for transmitting and receiving wireless signals. For example, the communication module 190 may correspond to a wireless communication module 1192 in FIG. 11. The communication module 190 may receive a signal using the antenna module 170. The communication module 190 may convert a signal received using the antenna module 170 into a baseband signal and transmit the converted signal to the processor 120. For example, the communication module 190 may transmit signals using the antenna module 170. The communication module 190 may convert the baseband signal received from the processor 120 into a radio frequency signal and transmit the converted radio frequency signal through the antenna module 170. The processor 120 may transmit and receive wireless signals by controlling the communication module 190. Exemplary components of the communication module 190 may be described below with reference to FIG. 4.

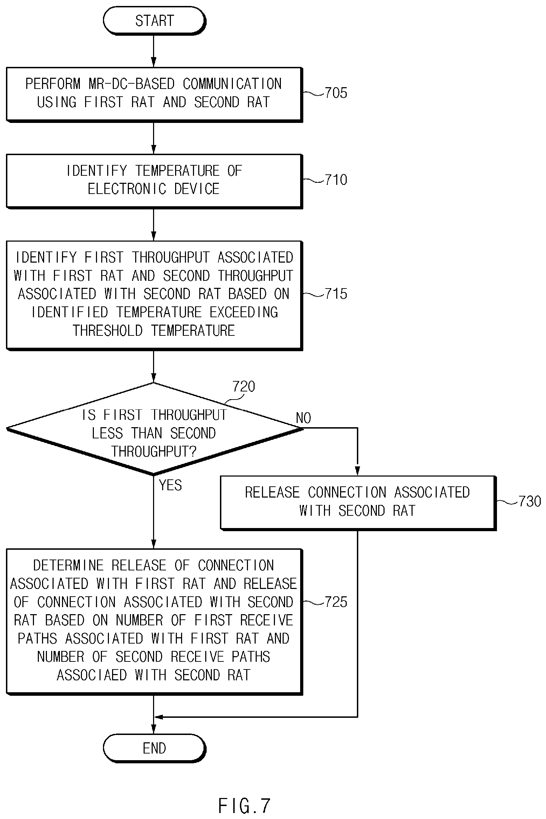

According to an embodiment, the electronic device 10 may control a wireless communication connection based on the temperature of the electronic device 10 during communication based on the MR-DC. The electronic device 10 may identify the temperature of the electronic device 10 using the sensor circuitry 180. When the identified temperature of the electronic device 10 during communication based on the MR-DC exceeds a specified threshold temperature (e.g., any value between about 40 degrees Celsius and about 47 degrees Celsius), the electronic device 10 may release (or drop) a first connection associated with the 4G RAT (e.g., the first RAT) or a second connection associated with the 5G RAT (e.g., the second RAT). In an example, the electronic device 10 may perform release of the first connection or release of the second connection based on a throughput of the first connection and/or a throughput of the second connection. In an example, the electronic device 10 may perform release of the first connection or release of the second connection based on the number of receive paths associated with the first RAT and/or the number of receive paths associated with the second RAT. In an example, the electronic device 10 may perform release of the first connection or release of the second connection based on transmit power. In an example, the electronic device 10 may perform release of the first connection or release of the second connection based on a multiplexing scheme. In an example, the electronic device 10 may perform release of the first connection or release of the second connection based on the throughput, the number of receive paths, and the transmit power. In an example, the electronic device 10 may perform release of the first connection or release of the second connection based on the throughput, the number of receive paths, and the multiplexing scheme. In an example, the electronic device 10 may perform release of the first connection or release of the second connection based on the throughput, the number of receive paths, the transmit power, and the multiplexing scheme. Methods for controlling the wireless connections of the electronic device 10 may be described below with reference to FIGS. 7 to 10.

For example, the electronic device 10 may reduce heat generation, power consumption, and performance degradation of the electronic device 10 by managing the wireless connection. For example, the electronic device 10 may improve a decrease in throughput when switching from MR-DC based communication to single RAT based communication by managing the wireless connection based on the throughput, transmit power, and/or multiplexing schemes. The effects of the electronic device 10 described above are exemplary and are not intended to limit the effects of the embodiments of the disclosure. It will be understood by those skilled in the art that any effect that may be derived from the embodiments of the disclosure may be applied to the embodiments of the disclosure.

FIG. 4 illustrates a structure of a wireless communication circuitry of an electronic device according to an embodiment.

According to an embodiment, the communication module 190 may include first communication circuitry 190a, second communication circuitry 190b, and a transceiver 190c. Components of the communication module 190 illustrated in FIG. 4 are exemplary, and embodiments of the disclosure are not limited thereto. For example, between the communication circuitry (e.g., the first communication circuitry 190a and/or the second communication circuitry 190b) and the transceiver 190c, at least one switch and/or at least one duplexer configured to change the connection between the communication circuitry and the transceiver 190c may be positioned. For example, the first communication circuitry 190a and the second communication circuitry 190b may include a plurality of modules.

According to an embodiment, the antenna module 170 may include first antenna circuitry 170a and second antenna circuitry 170b. For example, the first antenna circuitry 170a may include a plurality of antenna radiators. The first antenna circuitry 170a may further include at least one tuning circuitry connected to at least one of the plurality of antenna radiators. For example, the second antenna circuitry 170b may include a plurality of antenna radiators. The second antenna circuitry 170b may further include at least one tuning circuitry connected to at least one of the plurality of antenna radiators. Components of the antenna module 170 illustrated in FIG. 4 are exemplary, and embodiments of the disclosure are not limited thereto. For example, between the communication module 190 and the antenna module 170, at least one switch and/or at least one duplexer configured to change the connection between the communication module 190 and the antenna module 170 may be positioned. In an example, the first antenna circuitry 170a and the second antenna circuitry 170b may share at least one antenna.

For example, the first communication circuitry 190a may be electrically connected to the first antenna circuitry 170a. The second communication circuitry 190b may be electrically connected to the second antenna circuitry 170b. The first communication circuitry 190a may perform processing (e.g., amplification, filtering, and/or phase shifting) on a signal to be transmitted through the first antenna circuitry 170a. The second communication circuitry 190b may perform processing (e.g., amplification, filtering, and/or phase shifting) on a signal to be transmitted through the second antenna circuitry 170b. The first communication circuitry 190a may perform processing (e.g., amplification, filtering, and/or phase shifting) on the signal received through the first antenna circuitry 170a. The second communication circuitry 190b may perform processing (e.g., amplification, filtering, and/or phase shifting) on the signal received through the second antenna circuitry 170b. Each of the first communication circuitry 190a and the second communication circuitry 190b may include at least one of an amplifier, a low noise amplifier (LNA), at least one filter, a diplexer, a duplexer, a phase shifter, and/or a switch.

The transceiver 190c may, for example, perform processing on the baseband signal received from the processor 120. For example, the transceiver 190c may perform up-conversion, amplification, and/or filtering on the baseband signal. The transceiver 190c may transmit the processed signal to the first communication circuitry 190a and/or the second communication circuitry 190b, thereby transmitting signals. The transceiver 190c may process a signal based on a control signal from the processor 120.

The transceiver 190c may perform post-processing on a signal received from, for example, the first communication circuitry 190a and/or the second communication circuitry 190b. For example, the transceiver 190c may perform down-conversion, amplification, and/or filtering on the received signal. The transceiver 190c may convert the received signal into a baseband signal and transmit the baseband signal to the processor 120. The transceiver 190c may process a signal based on a control signal from the processor 120.

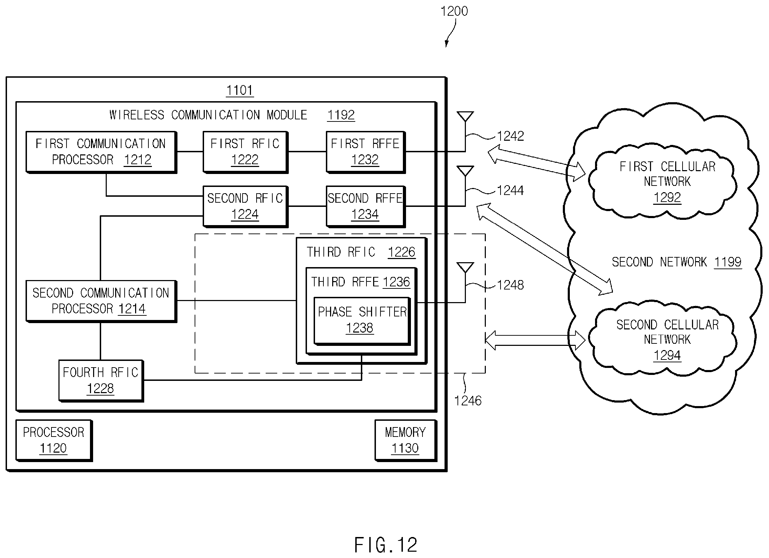

In an example, the first communication circuitry 190a may be communication circuitry for processing signals associated with 4G RAT. For example, the first communication circuitry 190a may correspond to a first radio frequency front end (RFFE) in FIG. 12. The second communication circuitry 190b may be communication circuitry for processing signals associated with 5G RAT. For example, the second communication circuitry 190b may correspond to a second RFFE 1234 and/or a third RFFE 1236 in FIG. 12. The transceiver 190c may be configured to process signals associated with 4G RAT and signals associated with 5G RAT. The transceiver 190c may be implemented as one chip or a plurality of chips. For example, the transceiver 190c may correspond to a first RFIC 1222, a the second RFIC 1224, a third RFIC 1226, and/or a fourth RFIC 1228 in FIG. 12. In an example, the processor 120 may be configured to process signals associated with 4G RAT and/or signals associated with 5G RAT. For example, the processor 120 may correspond to a first communication processor 1212 and/or a second communication processor 1214 in FIG. 12.

With reference to FIG. 4, the components of the wireless communication circuitry of the electronic device 10 described above are exemplary, and the embodiments of the disclosure are not limited thereto. It will be understood by those skilled in the art that any structure for supporting MR-DC may be utilized in the electronic device 10.

FIG. 5 illustrates an exemplary antenna structure of an electronic device according to an embodiment.

Referring to FIG. 5, an electronic device 10 may include a plurality of antennas. At least one of the plurality of antennas illustrated in FIG. 5 may correspond to an antenna included in the antenna module 170 in FIG. 3. For example, at least one of the plurality of antennas illustrated in FIG. 5 may be included in the first antenna circuitry 170a and/or the second antenna circuitry 170b in FIG. 4.

For example, the electronic device 10 may include a housing 510. The housing 510 may include a side housing surrounding the space between a front surface (e.g., a display surface) and a back surface of the electronic device 10. At least a portion of the housing 510 may be used as an antenna radiator. For example, the housing 510 may include a metallic member, and the metallic member may be electrically isolated by a dielectric slit (e.g., slits in FIG. 5). A portion of the metallic member, electrically isolated, may be used as an antenna. For example, at least one of portions 511, 512, 513, 514, 515, 516, 517, and 518 of the housing 510, isolated by the slits, may be used as an antenna radiator.

For example, the electronic device 10 may include a substrate 520 positioned inside the housing 501. A conductive pattern 530 may be positioned within or on the substrate 520. The conductive pattern 530 may be used as an antenna. The substrate 520 may include, for example, a printed circuit board (PCB), a flexible PCB (FPCB) or any substrate structure within the housing 510.

The antennas described with reference to FIG. 5 are exemplary, and the embodiments of the disclosure are not limited thereto. For example, a metal plate on a back surface of the display, a metallic pattern engraved in the housing 510, or any metal structure may be used as an antenna.

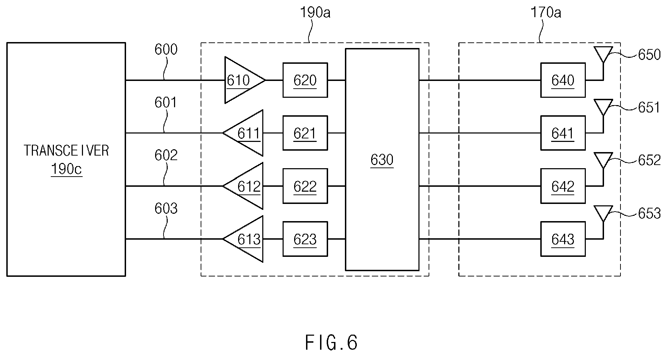

With reference to FIGS. 6 to 10, various operations of the electronic device 10 according to an embodiment may be described. Below, various operations of the electronic device 10 are described with reference to the content described above with reference to FIGS. 1 to 5. However, the content described above with reference to FIGS. 1 to 5 is intended to facilitate understanding and should not be construed as limiting the scope of the rights of the disclosure.

FIG. 6 illustrates a structure of communication circuitry of an electronic device according to an embodiment.

Referring to FIG. 6, according to an embodiment, a transceiver 190c may be connected to at least one transmit path and/or at least one receive path. For example, first communication circuitry 190a may include a transmit path 600, a first receive path 601, a second receive path 602, and a third receive path 603. The number of receive paths and the number of transmit paths illustrated in FIG. 6 are exemplary, and the embodiments of the disclosure are not limited thereto.

According to an example, the transmit path 600 may include at least one power amplifier (e.g., a power amplifier 610) and filter circuitry 620. For example, the first receive path 601 may include at least one power amplifier (e.g., a low noise amplifier, (LNA) (e.g., a first power amplifier 611) and a first filter circuitry 621. For example, the second receive path 602 may include at least one power amplifier (e.g., a second power amplifier 612) and a second filter circuitry 622. For example, the third receive path 603 may include at least one power amplifier (e.g., a third power amplifier 613) and a third filter circuitry 623.

The first communication circuitry 190a may include a switching circuitry 630. For example, the switching circuitry 630 may include at least one switch and/or at least one duplexer. The switching circuitry 630 may be configured to change the connection between the receive path and the transmit path and the first antenna circuitry 170a. For example, the switching circuitry 630 may be configured to receive a control signal from the transceiver 190c or a processor (e.g., the processor 120 in FIG. 4) and change the connection between the first communication circuitry 190a and the first antenna circuitry 170a based on the received control signal.

For example, the first antenna circuitry 170a may include a first antenna 650, a second antenna 651, a third antenna 652, and a fourth antenna 653. The first antenna 650 may be electrically connected to first tuning circuitry 640. The first tuning circuitry 640 may include at least one element for impedance control of the first antenna 650. Similarly, the second antenna 651 may be electrically connected to second tuning circuitry 641, the third antenna 652 may be electrically connected to third tuning circuitry 642, and the fourth antenna 653 may be electrically connected to fourth tuning circuitry 643. The tuning circuits illustrated in FIG. 6 are exemplary, and at least some of the illustrated tuning circuits may be omitted.

For convenience of description, the first communication circuitry 190a and the first antenna circuitry 170a have been described with reference to FIG. 6, but a similar structure may also be applied to the second communication circuitry 190b and the second antenna circuitry 170b in FIG. 4. For example, the second communication circuitry 190b may include a structure similar to the first communication circuitry 190a. For example, the second antenna circuitry 170b may include a structure similar to the first antenna circuitry 170a. In an example, the switching circuitry 630 may be configured to allow the first communication circuitry 190a and the second communication circuitry 190b to share at least one antenna.

With reference to FIGS. 4 and 6, in the disclosure, the term "transmit path" may be referred to as an electrical path from the transceiver 190c to a specific antenna or an electrical path used for transmitting a signal within the communication circuitry (e.g., the communication module). For example, the transmit path 600 may be connected to the second antenna 651 through the switching circuitry 630. In this case, the "transmit path" may include components positioned on the electrical path between the transmit path 600 and the second antenna 651. In the disclosure, the term "receive path" may be referred to as an electrical path from the antenna to the transceiver 190c or an electrical path used for receiving a signal within a communication circuitry (e.g., the communication module). For example, the first receive path 601 may be connected to the first antenna 650 through the switching circuitry 630. In this case, the "receive path" may include components positioned on the electrical path between the first receive path 601 and the first antenna 650.

In the disclosure, the number of receive paths associated with a RAT may be referred to as the number of logical or physical paths used to receive signals of the corresponding RAT. The number of receive paths associated with the first RAT may be referred to as the number of paths used to receive signals of the first RAT. The number of receive paths associated with the second RAT may be referred to as the number of paths used to receive signals of the second RAT.

For example, the number of receive paths associated with a RAT may mean the number of physical receive paths used to receive signals of that RAT. For example, when the first receive path 601 and the second receive path 602 are used to receive signals of the first RAT, the number of receive paths associated with the first RAT may be two.

For example, the number of receive paths associated with a RAT may mean the number of logical receive paths used to receive signals of that RAT. For example, the number of receive paths associated with the RAT may be referred to as the number of layers associated with the corresponding RAT. The number of layers may be referred to as the number of logical receive paths used to receive component carriers (CCs) associated with the corresponding RAT. For example, the electronic device 10 may perform carrier aggregation (CA) based on the first RAT using a first component carrier and a second component carrier of the first RAT. For example, the electronic device 10 may receive the first element carrier and the second element carrier using the second receive path 602. In this case, even when the number of physical receive paths is one, the number of logical receive paths may be two.

In an example, the processor 120 may identify the number of receive paths associated with the RAT based on a signal from the transceiver 190c. The transceiver 190c may transmit information indicating the number of receive paths associated with each RAT to the processor 120. In an example, the processor 120 may identify the number of receive paths associated with the RAT based on the electric power supplied to the power amplifier of each receive path.

FIG. 7 illustrates a flowchart of a method for controlling dual connectivity of an electronic device according to an embodiment.

With reference to FIGS. 3 and 7, according to an embodiment, the electronic device 10 may be configured to control dual connectivity based on an internal temperature of the electronic device 10 (e.g., an internal temperature associated with a surface temperature).

In operation 705, the electronic device 10 may perform communication based on MR-DC using the first RAT (e.g., the 4G RAT) and the second RAT (e.g., the 5G RAT). For example, as described above with reference to FIGS. 1 and 2, the electronic device 10 may perform communication based on NE-DC or EN-DC.

In operation 710, the electronic device 10 may identify the temperature of the electronic device 10. As described above with reference to FIG. 3, the electronic device 10 may identify the temperature of the electronic device 10 using the sensor circuitry 180. For example, the processor 120 may periodically identify the temperature of the electronic device 10. For example, the processor 120 may identify the temperature of the electronic device 10 while performing MR-DC based communication. For example, the sensor circuitry 180 may be configured to generate an interrupt signal when the identified temperature exceeds a specified threshold temperature. The processor 120 may identify the temperature of the electronic device 10 based on the reception of the interrupt signal.

In operation 715, the electronic device 10 may identify a first throughput associated with the first RAT and a second throughput associated with the second RAT based on the identified temperature exceeding the threshold temperature. For example, the electronic device 10 may identify the first throughput and the second throughput from throughput identified by the processor 120. For example, the electronic device 10 may identify the first throughput based on the amount of data acquired by receiving a signal associated with the first RAT. The electronic device 10 may identify the first throughput based on the amount of data that is successfully decoded from a signal associated with the first RAT. In an example, the electronic device 10 may identify the first throughput based on the amount of data that is successfully decoded from the signal associated with the first RAT during a specified time interval. For example, the electronic device 10 may identify the second throughput based on the amount of data acquired by receiving a signal associated with the second RAT. The electronic device 10 may identify the second throughput based on the amount of data that is successfully decoded from the signal associated with the second RAT. In an example, the electronic device 10 may identify the second throughput based on the amount of data that is successfully decoded from the signal associated with the second RAT during a specified time interval. The above-described method for identifying throughput is exemplary, and it will be understood by those skilled in the art that the electronic device 10 may identify throughput using any internal information. Furthermore, the electronic device 10 may identify throughput independently of temperature. For example, the electronic device 10 may periodically identify throughput. For example, when a threshold temperature is exceeded, the electronic device 10 may identify the first throughput and the second throughput using the most recently identified throughput.

In operation 720, the electronic device 10 may determine whether the first throughput is less than the second throughput. When the first throughput is greater than or equal to the second throughput (e.g., NO in operation 720), in operation 730, the electronic device 10 may release the connection associated with the second RAT. In this case, the electronic device 10 may release the connection associated with the second RAT and transmit and receive data through the connection associated with the first RAT. The electronic device 10 may reduce the temperature of the electronic device 10 by releasing the connection associated with the second RAT.

When the first throughput is less than the second throughput (e.g., YES in operation 720), in operation 725, the electronic device 10 may determine release of the connection associated with the first RAT or release of the connection associated with the second RAT based on the number of first receive paths associated with the first RAT and the number of second receive paths associated with the second RAT. When the second throughput is relatively higher than the first throughput, the electronic device 10 may determine which connection to release based on the number of receive paths that affect the temperature of the electronic device 10.

**[Table 1]**

| Number of layers | 2 | 4 | 6 | 8 | 10 | 12 | 14 |
|---|---|---|---|---|---|---|---|
| Receive power (dBm) | Temperature (Celsius) | | | | | | |
| 11 | 39.2 | 39.4 | 39.7 | 40.7 | 40.9 | 42.4 | 43.3 |
| 12 | 39.6 | 39.8 | 39.7 | 41.1 | 41.4 | 42.6 | 43.8 |
| 13 | 40.1 | 40.3 | 39.8 | 41.4 | 41.8 | 42.7 | 44.1 |
| 14 | 40.6 | 40.5 | 40.2 | 41.5 | 42.8 | 43.4 | 44.4 |
| 15 | 41.1 | 40.8 | 41.5 | 41.5 | 43.2 | 43.7 | 44.8 |
| 16 | 41.6 | 41.3 | 41.8 | 42.9 | 43.5 | 43.9 | 45.7 |
| 17 | 41.6 | 41.8 | 42.3 | 43.2 | 44.1 | 44.4 | 46.3 |
| 18 | 42.0 | 42.0 | 42.6 | 43.5 | 44.3 | 44.8 | 46.9 |
| 19 | 42.0 | 42.2 | 43.2 | 43.8 | 44.5 | 44.4 | 46.3 |
| 20 | 42.4 | 42.9 | 43.4 | 44.0 | 45.7 | 46.3 | 48.1 |
| 21 | 43.1 | 43.3 | 43.9 | 44.5 | 46.0 | 46.5 | 48.6 |

Table 1 shows an example of the temperature of an electronic device depending on the number of receive paths (e.g., the number of layers). Referring to Table 1, it is shown that even within the same receive power, there is a tendency for the temperature of the electronic device 10 to increase as the number of receive paths increases. For example, even when the second throughput is greater than or equal to the first throughput, the electronic device 10 may release the connection associated with the second RAT when the number of second receive paths is greater than the number of first receive paths. The electronic device 10 may determine which connection to release based on the number of receive paths along with the throughput, thereby lowering the temperature of the electronic device 10 more quickly. For example, the electronic device 10 may release the connection associated with the first RAT when the second throughput is greater than or equal to the first throughput and the number of second receive paths is less than the number of first receive paths.

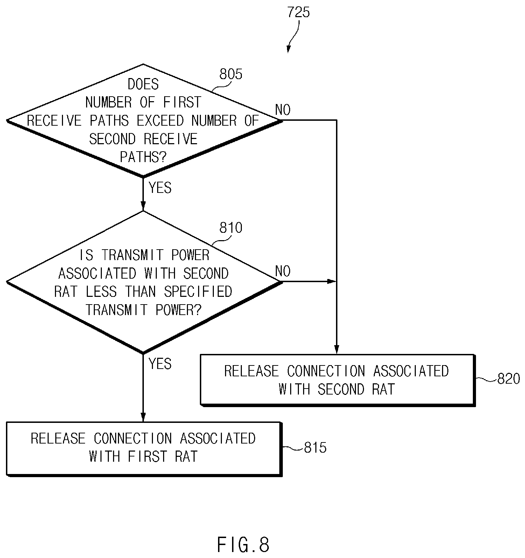

When the connection associated with the first RAT is released according to operation 725, the electronic device 10 may transmit and receive signals through the connection associated with the second RAT. When the connection associated with the second RAT is released according to operation 725, the electronic device 10 may transmit and receive signals through the connection associated with the first RAT. Below, examples of operation 725 may be described with reference to FIGS. 8 to 10.

FIG. 8 illustrates a flowchart of operation 725 of FIG. 7 according to an example.

Referring to FIGS. 3 and 8, in operation 805, the electronic device 10 may determine whether the number of first receive paths exceeds the number of second receive paths. The number of first receive paths may include the number of receive paths associated with the first RAT, and the number of second receive paths may include the number of receive paths associated with the second RAT.

When the number of second receive paths is greater than or equal to the number of first receive paths (e.g., NO in operation 805), in operation 820, the electronic device 10 may release the connection associated with the second RAT. In this case, the electronic device 10 may release the connection associated with the second RAT and transmit and receive data through the connection associated with the first RAT. For example, the electronic device 10 may perform carrier aggregation based on the first RAT.

When the number of first receive paths exceeds the number of second receive paths (e.g., YES in operation 805), in operation 810, the electronic device 10 may determine whether the transmit power associated with the second RAT is less than a specified transmit power. The transmit power associated with the second RAT may include transmit power set for a transmit path used for signal transmission of the second RAT. When the electronic device 10 performs a power backoff, the transmit power associated with the second RAT may include the transmit power after the power backoff is applied. For example, the electronic device 10 may determine whether the transmit power associated with the second RAT is less than a specified transmit power by comparing the transmit power value stored in the memory 130 with the transmit power of an uplink signal associated with the second RAT.

When the transmit power associated with the second RAT is greater than or equal to the specified transmit power (e.g., NO in operation 810), the electronic device 10 may release the connection associated with the second RAT according to operation 820. When the transmit power associated with the second RAT is less than the specified transmit power (e.g., YES in operation 810), in operation 815, the electronic device 10 may release the connection associated with the first RAT. The electronic device 10 may release the connection associated with the first RAT and transmit and receive signals through the connection associated with the second RAT. For example, the electronic device 10 may perform carrier aggregation based on the second RAT.

**[Table 2]**

| | | | | | | | | |
|---|---|---|---|---|---|---|---|---|
| Transmit power (dBm) | 12 | 14 | 16 | 18 | 20 | 21 | 22 | 23 |
| Temperature (Celsius) | 37.7 | 39.3 | 40.9 | 42 | 41.3 | 41.7 | 43.0 | 44.0 |

Table 2 shows exemplary temperatures of the electronic device 10 depending on transmit power. Typically, the temperature of the electronic device 10 tends to increase as the transmit power increases. The electronic device 10 may reduce the temperature of the electronic device 10 by releasing the connection associated with the second RAT when the transmit power associated with the second RAT is greater than or equal to the specified transmit power.

According to an embodiment, the electronic device 10 may store specified transmit power values mapped to modulation schemes for an uplink signal. For example, the specified transmit power in operation 810 may be a transmit power mapped to an uplink modulation scheme for the second RAT. For example, in operation 810, the electronic device 10 may determine whether the transmit power associated with the second RAT is less than the transmit power mapped to the modulation scheme for the second RAT. For example, as a modulation rate increases in the modulation scheme, the temperature of the electronic device 10 may also increase. For the modulation scheme having a relatively high modulation rate, relatively low transmit power may be specified. As the modulation rate increases, the specified transmit power of operation 810 may be reduced.

**[Table 3]**

| Transmit power (dBm) | | Modulation scheme | | | |
|---|---|---|---|---|---|
| | | QPSK | 16-QAM | 64-QAM | 256-QAM |
| 20 | Temperature (Celsius) | 41.6 | 41.6 | 41.9 | 50.8 |
| 19 | | 42.1 | 42.1 | 41.7 | 50.8 |
| 18 | | 41.2 | 41.2 | 41.8 | 50.8 |
| 17 | | 41 | 41.1 | 41.4 | 47.7 |
| 16 | | 40.1 | 40.1 | 40.7 | 47.1 |
| 15 | | 38.9 | 38.9 | 39.9 | 46.1 |
| 14 | | 38.3 | 38.7 | 39.5 | 43.7 |
| 13 | | 37.7 | 38.1 | 39.2 | 42.1 |
| 12 | | 37.2 | 37.7 | 38.8 | 41.4 |

Table 3 shows exemplary temperatures of the electronic devices 10 depending on transmit power and modulation schemes. Compared to quadrature phase shift keying (QPSK), 16-quadrature amplitude modulation (QAM), and 64-QAM, 256-QAM shows relatively high temperatures. For example, the transmit power specified for the modulation scheme of the uplink signal for 256-QAM (e.g., the transmit power in operation 810) may be lower than the transmit power specified for the modulation schemes for QPSK, 16-QAM, and 64-QAM.

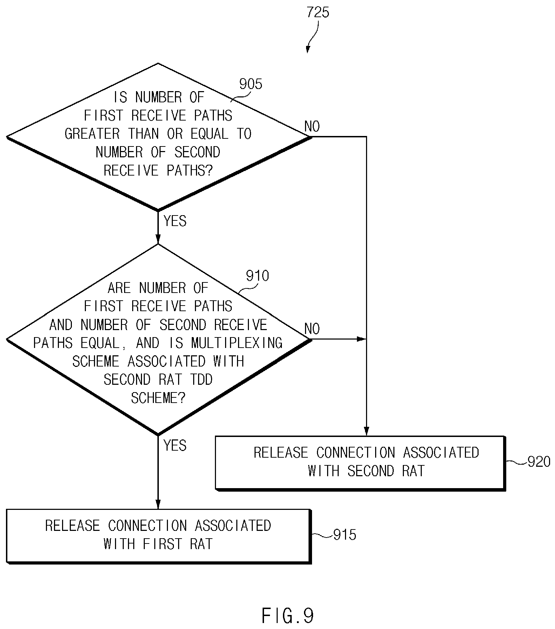

FIG. 9 illustrates a flowchart of operation 725 of FIG. 7 according to an example.

Referring to FIGS. 3 and 9, in operation 905, the electronic device 10 may determine whether the number of first receive paths is greater than or equal to the number of second receive paths. The number of first receive paths may include the number of receive paths associated with the first RAT, and the number of second receive paths may include the number of receive paths associated with the second RAT.

When the number of second receive paths exceeds the number of first receive paths (e.g., NO in operation 905), in operation 820, the electronic device 10 may release the connection associated with the second RAT. In this case, the electronic device 10 may release the connection associated with the second RAT and transmit and receive data through the connection associated with the first RAT.

When the number of first receive paths is greater than or equal to the number of second receive paths (e.g., YES in operation 905), in operation 910, the electronic device 10 may determine whether the number of first receive paths and the number of second receive paths are equal and that the multiplexing scheme associated with the second RAT is a time division duplex (TDD) scheme. For example, when the multiplexing scheme for the uplink signal associated with the second RAT is the TDD scheme, the electronic device 10 may determine that the multiplexing scheme associated with the second RAT is the TDD scheme. For example, when the multiplexing scheme for a primary component carrier (PCC) associated with the second RAT is the TDD scheme, the electronic device 10 may determine that the multiplexing scheme associated with the second RAT is the TDD scheme.

When the multiplexing scheme associated with the second RAT is not the time division duplex scheme (e.g., NO in operation 910), the electronic device 10 may release the connection associated with the second RAT according to operation 920. For example, when the multiplexing scheme associated with the second RAT is a frequency division duplex (FDD) scheme, the electronic device 10 may release the connection associated with the second RAT. The electronic device 10 may release the connection associated with the second RAT and transmit and receive signals through the connection associated with the first RAT. For example, the electronic device 10 may perform carrier aggregation based on the first RAT.

When the number of first receive paths and the number of second receive paths are not equal (e.g., NO in operation 910), the electronic device 10 may release the connection associated with the second RAT according to operation 920. For example, when the number of second receive paths exceeds the number of first receive paths, the electronic device 10 may release the connection associated with the second RAT. The electronic device 10 may release the connection associated with the second RAT and transmit and receive signals through the connection associated with the first RAT. For example, the electronic device 10 may perform carrier aggregation based on the first RAT.

When the multiplexing scheme associated with the second RAT is the time division duplex scheme and the number of first receive paths and the number of second receive paths are equal (e.g., YES in operation 910), in operation 915, the electronic device 10 may release the connection associated with the first RAT. The electronic device 10 may release the connection associated with the first RAT and transmit and receive signals through the connection associated with the second RAT. For example, the electronic device 10 may perform carrier aggregation based on the second RAT.

TDD communication based on the second RAT may support relatively wide bandwidth (e.g., 100 MHz). Even when the number of receive paths associated with the first RAT and the number of receive paths associated with the second RAT are equal, the throughput associated with the second RAT may be relatively higher due to its wider bandwidth. In an example, the electronic device 10 may perform backoff according to subframe settings in the case of the TDD scheme. The electronic device 10 may perform backoff for transmit power based on the ratio of uplink slots indicated by the subframe settings. Therefore, when using the TDD scheme, the temperature of the electronic device 10 may be relatively lower than when using the FDD scheme. The electronic device 10 may reduce the temperature of the electronic device 10 and improve throughput using the second RAT when the number of receive paths associated with the first RAT and the number of receive paths associated with the second RAT are equal and the second RAT uses the TDD scheme.

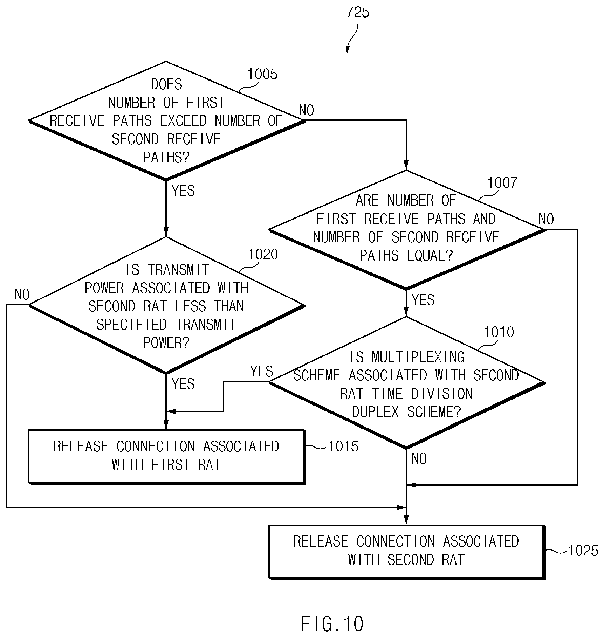

FIG. 10 illustrates a flowchart of operation 725 of FIG. 7 according to an example.

Referring to FIGS. 3 and 10, in operation 1005, the electronic device 10 may determine whether the number of first receive paths exceeds the number of second receive paths. The number of first receive paths may include the number of receive paths associated with the first RAT, and the number of second receive paths may include the number of receive paths associated with the second RAT.

When the number of first receive paths exceeds the number of second receive paths (e.g., YES in operation 1005), in operation 1020, the electronic device 10 may determine whether the transmit power associated with the second RAT is less than a specified transmit power. For example, the electronic device 10 may perform operation 1020 according to operation 810 in FIG. 8. When the transmit power associated with the second RAT is greater than or equal to the specified transmit power (e.g., NO in operation 1020), the electronic device 10 may release the connection associated with the second RAT according to operation 1025. When the transmit power associated with the second RAT is less than the specified transmit power (e.g., YES in operation 1020), the electronic device 10 may release the connection associated with the first RAT according to operation 1015.

When the number of first receive paths does not exceed the number of second receive paths (e.g., NO in operation 1005), in operation 1007, the electronic device 10 may determine whether the number of first receive paths and the number of second receive paths are equal. When the number of first receive paths and the number of second receive paths are equal (e.g., YES in operation 1007), in operation 1010, the electronic device 10 may determine whether the multiplexing scheme associated with the second RAT is the time division duplex (TDD) scheme. For example, when the multiplexing scheme for the uplink signal associated with the second RAT is the TDD scheme, the electronic device 10 may determine that the multiplexing scheme associated with the second RAT is the TDD scheme. For example, when the multiplexing scheme for a primary component carrier (PCC) associated with the second RAT is the TDD scheme, the electronic device 10 may determine that the multiplexing scheme associated with the second RAT is the TDD scheme.

When the number of first receive paths and the number of second receive paths are equal and the multiplexing scheme associated with the second RAT is the time division duplex scheme (e.g., YES in operation 1010), in operation 1015, the electronic device 10 may release the connection associated with the first RAT. The electronic device 10 may release the connection associated with the first RAT and transmit and receive signals through the connection associated with the second RAT. For example, the electronic device 10 may perform carrier aggregation based on the second RAT.

When the multiplexing scheme associated with the second RAT is not the time division duplex scheme (e.g., NO in operation 1010) or when the number of first receive paths and the number of second receive paths are not equal (e.g., NO in operation 1007), the electronic device 10 may release the connection associated with the second RAT according to operation 1025.

Referring back to FIG. 4, the electronic device (e.g., the electronic device 10) according to an embodiment may include at least one antenna (e.g., the antenna circuitry 170), at least one communication circuitry (e.g., the first communication circuitry 190a and/or the second communication circuitry 190b) electrically connected to the at least one antenna and including a plurality of receive paths, at least one transceiver (e.g., the transceiver 190c) electrically connected to the at least one communication circuitry, at least one sensor circuitry (e.g., the sensor circuitry 180) configured to detect the temperature of the electronic device, a processor (e.g., the processor 120) electrically connected to the sensor circuitry and the at least one transceiver, and a memory (e.g., the memory 130) electrically connected to the processor. The memory may store instructions that, when executed, cause the processor to perform operations to be described below. The processor may perform communication based on multi-RAT dual connectivity (MR-DC) using a first radio access technology (RAT) and a second RAT using the at least one communication circuitry, and may identify the temperature of the electronic device using the at least one sensor circuitry while performing the communication based on the MR-DC. The processor may identify a first throughput associated with the first RAT and a second throughput associated with the second RAT based on the identified temperature exceeding a threshold temperature. The processor may determine release of a connection associated with the first RAT or release of a connection associated with the second RAT based on the number of first receive paths associated with the first RAT among the plurality of receive paths and the number of second receive paths associated with the second RAT among the plurality of receive paths, when the first throughput is less than the second throughput. The processor may release the connection associated with the second RAT and transmit and receive a signal through the connection associated with the first RAT when the first throughput is not less than the second throughput (e.g., the first throughput is greater than or equal to the second throughput).

For example, the processor may be configured to release the connection associated with the second RAT and transmit and receive a signal through the connection associated with the first RAT when the first throughput is less than the second throughput and the number of first receive paths is less than or equal to the number of second receive paths.

For example, the processor may be configured to identify the modulation scheme of an uplink signal associated with the second RAT when the first throughput is less than the second throughput and the number of first receive paths exceeds the number of second receive paths, and release the connection associated with the first RAT and transmit and receive a signal through the connection associated with the second RAT when a transmit power of a signal associated with the second RAT is a threshold power mapped to the identified modification scheme. The processor may be configured to release the connection associated with the second RAT and transmit and receive a signal through the connection associated with the first RAT when a transmit power associated with the second RAT is greater than or equal to the threshold power.

The processor may be configured to identify a multiplexing scheme of an uplink signal associated with the second RAT when the first throughput is less than the second throughput and the number of first receive paths and the number of second receive paths are equal. The processor may be configured to release the connection associated with the first RAT and transmit and receive a signal through the connection associated with the second RAT when the identified multiplexing scheme corresponds to time division duplex (TDD). The processor may be configured to release the connection associated with the second RAT and transmit and receive a signal through the connection associated with the first RAT when the identified multiplexing scheme corresponds to frequency division duplex (FDD).

For example, the number of first receive paths may correspond to the sum of the numbers of receive paths used for reception of each of at least one first component carrier associated with the first RAT among the plurality of receive paths. For example, the number of second receive paths may correspond to the sum of the numbers of receive paths used for reception of each of at least one second component carrier associated with the second RAT among the plurality of receive paths.

For example, the number of first receive paths may correspond to the number of receive paths used for reception of signals associated with the first RAT among the plurality of receive paths. The number of second receive paths may correspond to the number of receive paths used for reception of signals associated with the second RAT among the plurality of receive paths.

For example, the processor may be configured to identify the number of first receive paths based on power supplied to receive paths used for reception of signals associated with the first RAT among the plurality of receive paths. The processor may be configured to identify the number of second receive paths based on power supplied to receive paths used for reception of signals associated with the second RAT among the plurality of receive paths.

For example, the first RAT may be a RAT corresponding to an evolved UMTS terrestrial radio access network (E-UTRAN), and the second RAT may be a RAT corresponding to a new radio-radio access network (NG-RAN).

A method for temperature-based dual connectivity control of the electronic device 10 according to an embodiment may include performing communication based on MR-DC using a first RAT and a second RAT (e.g., operation 705 in FIG. 7), identifying a temperature of the electronic device during the performance of the communication based on the MR-DC (e.g., operation 710 in FIG. 7), identifying a first throughput associated with the first RAT and a second throughput associated with the second RAT based on the identified temperature exceeding a threshold temperature (e.g., operation 715 in FIG. 7), releasing a connection associated with the second RAT and transmitting and receiving a signal through a connection associated with the first RAT when the first throughput is not less than the second throughput (the first throughput is greater than or equal to the second throughput) (e.g., operation 730 in FIG. 7), and determining release of the connection associated with the first RAT or release of the connection associated with the second RAT based on the number of first receive paths associated with the first RAT and the number of second receive paths associated with the second RAT among the plurality of receive paths, when the first throughput is less than the second throughput (e.g., operation 725 in FIG. 7).

For example, the determining of the release of the connection associated with the first RAT or the release of the connection associated with the second RAT may include releasing the connection associated with the second RAT and transmitting and receiving a signal through the connection associated with the first RAT when the number of first receive paths is less than or equal to the number of second receive paths (e.g., operation 820 in FIG. 8).

For example, the determining of the release of the connection associated with the first RAT or the release of the connection associated with the second RAT may include, when the number of first receive paths exceeds the number of second receive paths, identifying a modulation scheme of an uplink signal associated with the second RAT, releasing the connection associated with the first RAT and transmitting and receiving a signal through the connection associated with the second RAT when a transmit power of the signal associated with the second RAT is less than a threshold power mapped to the identified modulation scheme (e.g., operation 815 in FIG. 8), and releasing the connection associated with the second RAT and transmitting and receiving a signal through the connection associated with the first RAT when a transmit power associated with the second RAT is greater than or equal to the threshold power (e.g., operation 820 in FIG. 8).

For example, the determining of the release of a connection associated with the first RAT or the release of a connection associated with the second RAT may include, when the number of first receive paths and the number of second receive paths are equal, identifying a multiplexing scheme of an uplink signal associated with the second RAT (e.g., operation 910 in FIG. 9), releasing the connection associated with the first RAT and transmitting and receiving a signal through the connection associated with the second RAT when the identified multiplexing scheme corresponds to TDD (operation 915 in FIG. 9), and releasing the connection associated with the second RAT and transmitting and receiving a signal through the connection associated with the first RAT when the identified multiplexing scheme corresponds to FDD (operation 920 in FIG. 9).

For example, the number of first receive paths may correspond to the sum of the numbers of receive paths used for reception of each of at least one first component carrier associated with the first RAT among the plurality of receive paths. For example, the number of second receive paths may correspond to the sum of the numbers of receive paths used for reception of each of at least one second component carrier associated with the second RAT among the plurality of receive paths.

For example, the number of first receive paths may correspond to the number of receive paths used for reception of signals associated with the first RAT among the plurality of receive paths. The number of second receive paths may correspond to the number of receive paths used for reception of signals associated with the second RAT among the plurality of receive paths.

The method may further include identifying the number of first receive paths based on power supplied to receive paths used for reception of signals associated with the first RAT and identifying the number of second receive paths based on power supplied to receive paths used for reception of a signal associated with the second RAT.

For example, the first RAT may be a RAT corresponding to an evolved UMTS terrestrial radio access network (E-UTRAN), and the second RAT may be a RAT corresponding to a new radio-radio access network (NG-RAN).

FIG. 11 is a block diagram illustrating an electronic device 1101 in a network environment 1100 according to various embodiments.

Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thererto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 1164dB or less) for implementing mMTC, or U-plane latency (e.g., 0.5ms or less for each of downlink (DL) and uplink (UL), or a round trip of 11ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

FIG. 12 is a block diagram 1200 of the electronic device 1101 (e.g., the electronic device 10 in FIG. 1) for supporting legacy network communication and 5G network communication, according to various embodiments.

Referring to FIG. 12, the electronic device 1101 may include a first communication processor 1212, a second communication processor 1214, a first radio frequency integrated circuit (RFIC) 1222, a second RFIC 1224, and a third RFIC 1226, a fourth RFIC 1228, a first radio frequency front end (RFFE) 1232, a second RFFE 1234, a first antenna module 1242, a second antenna module1 244, and an antenna 1248. The electronic device 1101 may further include the processor 1120 and the memory 1130. The second network 1199 may include a first cellular network 1292 and a second cellular network 1294. According to another embodiment, the electronic device 1101 may further include at least one of the components illustrated in FIG. 11, and the second network 1199 may further include at least one other network. According to an embodiment, the first communication processor 1212, the second communication processor 1214, the first RFIC 1222, the second RFIC 1224, the fourth RFIC 1228, the first RFFE 1232, and the second RFFE 1234 may constitute at least a part of a wireless communication module 1192. According to another embodiment, the fourth RFIC 1228 may be omitted or may be included as a part of the third RFIC 1226.

The first communication processor 1212 may support the establishment of a communication channel of a band to be used for wireless communication with the first cellular network 1292 and legacy network communication through the established communication channel. According to various embodiments, the first cellular network 1292 may be a legacy network including a 2nd generation (2G), 3rd generation (3G), 4th generation (4G), and/or long-term evolution (LTE) network. The second communication processor 1214 may support the establishment of a communication channel corresponding to a specified band (e.g., approximately 6 GHz to 60 GHz) among bands to be used for wireless communication with the second cellular network 1294, and 5G network communication through the established communication channel. According to various embodiments, the second cellular network 1294 may be a 5G network defined by 3GPP. Additionally, according to an embodiment, the first communication processor 1212 or the second communication processor 1214 may support the establishment of a communication channel corresponding to another specified band (e.g., approximately 6 GHz or less) among bands to be used for wireless communication with the second cellular network 1294, and 5G network communication through the established communication channel. According to an embodiment, the first communication processor 1212 and the second communication processor 1214 may be implemented in a single chip or a single package. According to various embodiments, the first communication processor 1212 or the second communication processor 1214 may be formed with the processor 1120, the coprocessor 1123 of FIG. 1, or the communication module 1190 in a single chip or a single package.

Upon transmission, the first RFIC 1222 may convert a baseband signal generated by the first communication processor 1212 into a radio frequency (RF) signal of approximately 700 MHz to approximately 3 GHz used in the first cellular network 1292 (e.g., a legacy network). Upon reception, an RF signal may be obtained from the first cellular network 1292 (e.g., a legacy network) through an antenna (e.g., the first antenna module 1242), and may be preprocessed through an RFFE (e.g., the first RFFE 1232). The first RFIC 1222 may convert the preprocessed RF signal into a baseband signal so as to be processed by the first communication processor 1212.

Upon transmission, the second RFIC 1224 may convert a baseband signal generated by the first communication processor 1212 or the second communication processor 1214 into an RF signal (hereinafter, referred to as a 5G Sub6 RF signal) of the Sub6 band (e.g., approximately 6 GHz or less, frequency range 1 (RF1)) used in the second cellular network 1294 (e.g., the 5G network). Upon reception, a 5G Sub6 RF signal may be obtained from the second cellular network 1294 (e.g., the 5G network) through an antenna (e.g., the second antenna module 1244), and may be preprocessed through an RFFE (e.g., the second RFFE 234). The second RFIC 1224 may convert the preprocessed 5G Sub6 RF signal into a baseband signal so as to be processed by a corresponding one of the first communication processor 1212 or the second communication processor 1214.

The third RFIC 1226 may convert a baseband signal generated by the second communication processor1214 into an RF signal (hereinafter, referred to as a 5G Above6 RF signal) of the 5G Above6 band (e.g., approximately 6 GHz to approximately 60 GHz, frequency range 2) to be used in the second cellular network 1294 (e.g., the 5G network). Upon reception, a 5G Above6 RF signal may be obtained from the second cellular network 1294 (e.g., the 5G network) through an antenna (e.g., the antenna 1248), and may be preprocessed through the third RFFE 1236. For example, the third RFFE 1236 may perform preprocessing of the signal by using a phase shifter 1238. The third RFIC 1226 may convert the preprocessed 5G Above6 RF signal into a baseband signal so as to be processed by the second communication processor 1214. According to an embodiment, the third RFFE 1236 may be formed as a part of the third RFIC 1226.

According to an embodiment, the electronic device 1101 may include the fourth RFIC 1228 separately from or at least as a part of the third RFIC 1226. In this case, the fourth RFIC 1228 may convert the baseband signal generated by the second communication processor 1214 into an RF signal (hereinafter, referred to as an intermediate frequency (IF) signal) of an intermediate frequency band (e.g., approximately 9 GHz to approximately 11 GHz), and then transmit the IF signal to the third RFIC 1226. The third RFIC 1226 may convert the IF signal into a 5G Above6 RF signal. Upon reception, a 5G Above6 RF signal may be received from the second cellular network 1294 (e.g., the 5G network) through an antenna (e.g., the antenna 1248), and may be converted into an IF signal by the third RFIC 1226. The fourth RFIC 1228 may convert the IF signal into the baseband signal so as to be processed by the second communication processor 1214.

According to an embodiment, the first RFIC 1222 and the second RFIC 1224 may be implemented as a single chip or at least a part of a single package. According to an embodiment, the first RFFE 1232 and the second RFFE 1234 may be implemented as a single chip or at least a part of a single package. According to an embodiment, at least one of the first antenna module 1242 or the second antenna module 1244 may be omitted or combined with another antenna module to process RF signals of a plurality of corresponding bands.

According to an embodiment, the third RFIC 1226 and the antenna 1248 may be disposed on the same substrate to form a third antenna module 1246. For example, the wireless communication module 1192 or the processor 1120 may be disposed on a first substrate (e.g., a main PCB). In this case, the third RFIC 1226 may be disposed in a partial region (e.g., the lower surface) of a second substrate (e.g., a sub PCB) separate from the first substrate, and the antenna 1248 may be disposed in another partial region (e.g., the upper surface) to form the third antenna module 1246. According to an embodiment, the antenna 1248 may include, for example, an antenna array that may be used for beamforming. By disposing the third RFIC 1226 and the antenna 1248 on the same substrate, it is possible to reduce the length of the transmission line therebetween. This, for example, may reduce the loss (e.g., attenuation) of a signal in a high frequency band (e.g., approximately 6 GHz to approximately 60 GHz, FR2) used for 5G network communication by the transmission line. Accordingly, the electronic device 1101 may improve the quality or speed of communication with the second cellular network 1294 (e.g., the 5G network).

The second cellular network 1294 (e.g., the 5G network) may be operated independently of (e.g., stand-alone (SA)) or operated to be connected to (e.g., non-stand alone (NSA)) the first cellular network 1292 (e.g., the legacy network). For example, in the 5G network, there may be only an access network (e.g., 5G radio access network (RAN) or next-generation RAN (NG RAN)) and no core network (e.g., next-generation core (NGC)). In this case, after accessing the access network of the 5G network, the electronic device 1101 may access an external network (e.g., the Internet) under the control of a core network (e.g., evolved packed core (EPC)) of the legacy network. Protocol information for communication with the legacy network (e.g., LTE protocol information) or protocol information for communication with the 5G network (e.g., New Radio (NR) protocol information) may be stored in the memory 1130 and may be accessed by other components (e.g., the processor 1120, the first communication processor 1212, or the second communication processor 1214).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (10) comprising:
at least one antenna;
at least one communication circuitry (190a, 190b) electrically connected to the at least one antenna and including a plurality of receive paths;
at least one transceiver (190c) electrically connected to the at least one communication circuitry;
at least one sensor circuitry (180) configured to detect a temperature of the electronic device;
at least one processor (120) electrically connected to the sensor circuitry and the at least one transceiver; and
memory (130) electrically connected to the at least one processor,
wherein the memory stores instructions that, when executed, cause the electronic device to:
perform communication based on multi-RAT dual connectivity (MR-DC) using a first radio access technology (RAT) and a second RAT using the at least one communication circuitry;
identify a temperature of the electronic device using the at least one sensor circuitry during the performance of the communication based on the MR-DC;
identify a first throughput associated with the first RAT and a second throughput associated with the second RAT based on the identified temperature exceeding a threshold temperature;
determine release of a connection associated with the first RAT or release of a connection associated with the second RAT based on the number of first receive paths associated with the first RAT among the plurality of receive paths and the number of second receive paths associated with the second RAT among the plurality of receive paths, in case that the first throughput is less than the second throughput.

2. The electronic device of claim 1, wherein when the instructions, when executed by the at least one processor, cause the electronic device to release the connection associated with the second RAT and transmit and receive a signal through the connection associated with the first RAT, when the first throughput is less than the second throughput and the number of first receive paths is less than or equal to the number of second receive paths.

3. The electronic device of claim 1, wherein the instructions, when executed by the at least one processor, cause the electronic device to:
when the first throughput is less than the second throughput and the number of first receive paths exceeds the number of second receive paths,
identify a modulation scheme of an uplink signal associated with the second RAT,
release the connection associated with the first RAT and transmit and receive a signal through the connection associated with the second RAT when a transmit power of the signal associated with the second RAT is less than a threshold power mapped to the identified modulation scheme, and
release the connection associated with the second RAT and transmit and receive a signal through the connection associated with the first RAT when a transmit power associated with the second RAT is greater than or equal to the threshold power.

4. The electronic device of claim 1, wherein the instructions, when executed by the at least one processor, cause the electronic device to:
when the first throughput is less than the second throughput and the number of first receive paths and the number of second receive paths are equal,
identify a multiplexing scheme of an uplink signal associated with the second RAT,
release the connection associated with the first RAT and transmit and receive a signal through the connection associated with the second RAT when the identified multiplexing scheme corresponds to time division duplex (TDD), and
release the connection associated with the second RAT and transmit and receive a signal through the connection associated with the first RAT when the identified multiplexing scheme corresponds to frequency division duplex (FDD).

5. The electronic device of claim 1, wherein the instructions, when executed by the at least one processor, cause the electronic device to determine the release of the connection associated with the second RAT when the first throughput is less than the second throughput and the number of second receive paths exceeds the number of first receive paths.

6. The electronic device of claim 1, wherein the instructions, when executed by the at least one processor, cause the electronic device to release the connection associated with the second RAT and transmit and receive a signal through the connection associated with the first RAT when the first throughput is greater than or equal to the second throughput.

7. The electronic device of claim 1,
wherein the number of first receive paths corresponds to the sum of the numbers of receive paths used for reception of each of at least one first component carrier associated with the first RAT among the plurality of receive paths, and
wherein the number of second receive paths corresponds to the sum of the numbers of receive paths used for reception of each of at least one second component carrier associated with the second RAT among the plurality of receive paths.

8. The electronic device of claim 1,
wherein the number of first receive paths corresponds to the number of receive paths used for reception of signals associated with the first RAT among the plurality of receive paths, and
wherein the number of second receive paths corresponds to the number of receive paths used for reception of signals associated with the second RAT among the plurality of receive paths.

9. The electronic device of claim 1, wherein the instructions, when executed by the at least one processor, cause the electronic device to:
identify the number of first receive paths based on power supplied to receive paths used for reception of signals associated with the first RAT among the plurality of receive paths, and
identify the number of second receive paths based on power supplied to receive paths used for reception of signals associated with the second RAT among the plurality of receive paths.

10. The electronic device of claim 1,
wherein the first RAT is a RAT corresponding to an evolved UMTS terrestrial radio access network (E-UTRAN), and
wherein the second RAT is a RAT corresponding to a new radio-radio access network (NG-RAN).

11. A method for temperature-based dual connectivity control of an electronic device (10), comprising:
performing communication based on MR-DC using a first RAT and a second RAT;
identifying a temperature of the electronic device during the performance of the communication based on the MR-DC;
identifying a first throughput associated with the first RAT and a second throughput associated with the second RAT based on the identified temperature exceeding a threshold temperature;
releasing a connection associated with the second RAT and transmitting and receiving a signal through a connection associated with the first RAT when the first throughput is greater than or equal to the second throughput; and
determining release of the connection associated with the first RAT or release of the connection associated with the second RAT based on the number of first receive paths associated with the first RAT and the number of second receive paths associated with the second RAT among the plurality of receive paths, when the first throughput is less than the second throughput.

12. The method of claim 11, wherein the determining of the release of the connection associated with the first RAT or the release of the connection associated with the second RAT includes releasing the connection associated with the second RAT and transmitting and receiving a signal through the connection associated with the first RAT when the number of first receive paths is less than or equal to the number of second receive paths.

13. The method of claim 11, wherein the determining of the release of the connection associated with the first RAT or the release of the connection associated with the second RAT includes, when the number of first receive paths exceeds the number of second receive paths:
identifying a modulation scheme of an uplink signal associated with the second RAT;
releasing the connection associated with the first RAT and transmitting and receiving a signal through the connection associated with the second RAT when a transmit power of the signal associated with the second RAT is less than a threshold power mapped to the identified modulation scheme; and
releasing the connection associated with the second RAT and transmitting and receiving a signal through the connection associated with the first RAT when a transmit power associated with the second RAT is greater than or equal to the threshold power.

14. The method of claim 11, wherein the determining of the release of the connection associated with the first RAT or the release of the connection associated with the second RAT includes, when the number of first receive paths exceeds the number of second receive paths:
identifying a multiplexing scheme of an uplink signal associated with the second RAT;
releasing the connection associated with the first RAT and transmitting and receiving a signal through the connection associated with the second RAT when the identified multiplexing scheme corresponds to TDD; and
releasing the connection associated with the second RAT and transmitting and receiving a signal through the connection associated with the first RAT when the identified multiplexing scheme corresponds to FDD.

15. The method of claim 11, wherein the determining of the release of the connection associated with the first RAT or the release of the connection associated with the second RAT includes, when the number of first receive paths and the number of second receive paths are equal:
identifying a multiplexing scheme of an uplink signal associated with the second RAT;
releasing the connection associated with the first RAT and transmitting and receiving a signal through the connection associated with the second RAT when the identified multiplexing scheme corresponds to TDD; and
determining the release of the connection associated with the first RAT or the release of the connection associated with the second RAT based on the modulation scheme of the uplink signal associated with the second RAT and a threshold power corresponding to the modulation scheme, when the identified multiplexing scheme corresponds to FDD.
